# EUROPÄISCHE PATENTANMELDUNG

(11) **EP 3 296 270 A1**
(43) Veröffentlichungstag der Anmeldung: **21.03.2018**
(21) Anmeldenummer: 17001216.5
(22) Anmeldetag: 17.07.2017
(51) Int. Cl.: C03B 9/16, C03B 9/193, C03B 40/027, C03B 9/38

(54) **TRICHTERMECHANISMUS ZUR ZUFÜHRUNG VON GLASTROPFEN IN VORFORMEN EINER GLASFORMMASCHINE**

(30) Priorität: 19.09.2016 DE 202016005715 U
(71) Anmelder: Rolf Themann & Partner SA, 1273 Luxembourg (LU)
(72) Erfinder: Themann, Rolf, 51101 Turnov (CZ)
(74) Vertreter: Lelgemann, Karl-Heinz

(57) **Zusammenfassung**

Ein Trichtermechanismus (1) zur Zuführung von Glastropfen in die Vorformen einer Glasformmaschine hat einen Trichterarm (2), der an einer glasformmaschinenseitigen Trichtersäule (3) verstellbar gelagert und oberhalb der ihm zugeordneten Vorformen der Glasformmaschine anordbar ist, und der je ihm zugeordneter Vorform einen Trichter (4, 5) aufweist, mittels dem ein Glastropfen zumindest etwa in einer mittigen Vertikalachse der ihm zugeordneten Vorform anordbar und in die Vorform einführbar ist.

Um einen derartigen Trichtermechanismus (1) zur Verfügung zu stellen, bei dem keine externen zusätzlichen Vorrichtungsteile erforderlich sind und bei dem Unregelmäßigkeiten etc. aufgrund von Fehlern von Bedienpersonal zuverlässig vermieden werden können, wird vorgeschlagen, dass der Trichtermechanismus (1) Fluidkanäle (7) aufweist, die eingangsseitig an eine Benetz- und Schmiermittelquelle (9, 10) angeschlossen sind und ausgangsseitig in die Trichter (4, 5) mündende Abstrahldüsen aufweisen, durch die hindurch ein im jeweiligen Trichter (4, 5) befindlicher Glastropfen mit Benetz- und Schmiermittel beaufschlagbar ist, und dass die Abstrahldüsen der Fluidkanäle so angeordnet und ausgerichtet sind, dass das Benetz- und Schmiermittel etwa in Horizontalrichtung auf den Glastropfen gerichtet wird.

## Beschreibung

Die Erfindung bezieht sich auf einen Trichtermechanismus zur Zuführung von Glastropfen in Vorformen einer Glasformmaschine, insbesondere einer IS-Behälterglas- oder Hohlglasmaschine, mit einem Trichterarm, der an einer glasformmaschinenseitigen Trichtersäule verstellbar gelagert und oberhalb der ihm zugeordneten Vorformen der Glasformmaschine anordbar ist, und der je ihm zugeordneter Vorform einen Trichter aufweist, mittels dem ein Glastropfen zumindest etwa in einer mittigen Vertikalachse der ihm zugeordneten Vorform anordbar und in die Vorform einführbar ist.

Entsprechend bezieht sich die vorliegende Erfindung auf die Benetzung und Schmierung von Glastropfen, die den Vorformen vertikal zugeführt werden sollen. Aus dem Stand der Technik sind technische Lösungen bekannt, bei denen die Schmierung der Vorformen mit Schmierbürsten manuell durchgeführt wird. Hierzu muß eine Bedienperson der Glasformmaschine nach jeweils 15 bis 20 Minuten jede einzelne Vorform jeder Station der Glasformmaschine von Hand schmieren. Hierdurch ergeben sich erhebliche Nachteile. Zum einen ist der Vorgang sehr personalintensiv. Darüber hinaus muß der Betrieb der Glasformmaschine eingestellt werden, um in jedem Fall Verletzungen des Bedienpersonals zu vermeiden. Des Weiteren ergeben sich Nachteile daraus, dass nicht jedes Mitglied des Bedienpersonals die Vorformen gleichmäßig schmiert. Während des Stillstands der Glasformmaschine kühlen die Vorformen ab, was dazu führt, dass die ersten danach hergestellten Glasartikel aufgrund mangelnder Qualität üblicherweise Ausschuß sind.

Bei einer moderneren Verfahrensweise werden die Vorformen mittels einer unreinen Verbrennung eines Gasgemisches aus Acetylen und Sauerstoff berußt. Hierdurch ist zwar eine Automatisierung des Schmiervorgangs möglich; auch diese Verfahrensweise ist mit wesentlichen Nachteilen einhergehend, z.B. ist die Verwendung von Gasen, Gasleitungen etc. an derartigen Glasformmaschinen mit Gefahren verbunden, woraus bei Leckagen Feuer und kleinere Explosionen resultieren können. Außerdem können nicht sämtliche Vorformen in dieser Weise geschmiert werden, da die bei dieser Verfahrensweise entstehende Verbrennungsflamme nur eine gewisse Tiefe erreicht. Mündungsformen und andere Teile am Formensatz müssen auch bei dieser Verfahrensweise zusätzlich manuell geschmiert werden.

Des Weiteren sind aus dem Stand der Technik Verfahrensweisen bekannt, bei denen Roboter eingesetzt werden, mittels denen auch eine Schmierung während des Betriebs der Glasformmaschine realisierbar ist. Auch mit diesen Lösungen sind erhebliche Nachteile einhergehend, wozu z.B. ein erhöhter Platzbedarf in diesem Bereich von Glasformmaschinen gehört. Darüber hinaus sind derartige technische Lösungen, bei denen Roboter eingesetzt werden, technisch und wirtschaftlich vergleichsweise aufwendig.

Ausgehend von dem eingangs geschilderten Trichtermechanismus zur Zuführung von Glastropfen in Vorformen einer Glasformmaschine liegt der Erfindung die Aufgabe zugrunde, einen derartigen Trichtermechanismus zur Verfügung zu stellen, bei dem keine externen zusätzlichen Vorrichtungsteile erforderlich sind und bei dem Unregelmäßigkeiten etc. aufgrund von Fehlern von Bedienpersonal zuverlässig vermieden werden können. Des Weiteren soll erfindungsgemäß eine die Umwelt in weitaus geringerem Ausmaß als beim Stand der Technik belastende Lösung zur Verfügung gestellt werden, wobei darüber hinaus sichergestellt werden soll, dass die Glastropfen und nicht die Vorformen benetzt und geschmiert werden, so dass bei dem anschließenden Produktionsvorgang eine möglichst hohe Qualität und ein möglichst geringer Ausschuß realisierbar ist.

Diese Aufgabe wird erfindungsgemäß dadurch gelöst, dass der Trichtermechanismus Fluidkanäle aufweist, die eingangsseitig an eine Benetz- und Schmiermittelquelle angeschlossen sind und ausgangsseitig in die Trichter mündende Abstrahldüsen aufweisen, durch die hindurch ein im jeweiligen Trichter befindlicher Glastropfen mit Benetz- und Schmiermittel beaufschlagbar ist, und dass die Abstrahldüsen der Fluidkanäle so angeordnet und ausgerichtet sind, dass das Benetz- und Schmiermittel etwa in Horizontalrichtung auf den Glastropfen gerichtet wird. Die Besprührichtung, in der das Benetz- und Schmiermittel auf einen Glastropfen trifft, der gerade den jeweiligen Trichter durchläuft, ist somit waagerecht bzw. horizontal. Durch die Fluidkanäle und Abstrahldüsen, die im Trichterarm integriert sind, kann jeder Glastropfen einzeln benetzt und geschmiert werden, wobei dieser Benetz- und Schmiervorgang in einem Abstand realisierbar ist, der durch eine Maschinensteuerung vom Bedienpersonal quasi beliebig einstellbar ist. Irgendwelche manuelle Tätigkeiten des Bedienpersonals sind nicht erforderlich. Entsprechend kann jeder Glastropfen immer gleichmäßig benetzt und geschmiert werden. Die Beaufschlagung der Glastropfen erfolgt jeweils entsprechend dem gerade herrschenden Anforderungsprofil. Die Benetzung und Schmierung des Glastropfens erfolgt darüber hinaus unmittelbar oberhalb der dem Glastropfen zugeordneten Vorform, in die der jeweilige Glastropfen unmittelbar nach dem Benetz- und Schmiervorgang eintritt.

Der als Abfall zu entsorgende Ausschuß an mittels der Glasformmaschine hergestellten Glasbehältnissen kann so signifikant reduziert werden. So ist beispielsweise die an IS-Glasformmaschinen bereits beim Stand der Technik hohe Ausbeute von ca. 93 % ordnungsgemäßen und den qualitativen Anforderungen genügenden Glasartikeln um 2 bis 3 % steigerbar.

Für das Bedienpersonal entstehen insoweit Vorteile, als ein Einatmen von Abgasen und/oder Rauchschwaden beim Schmieren der Vorformen ausgeschlossen ist. Aufgrund der geringeren Temperaturlastwechsel der Vorformen, die sich daraus ergeben, dass ein Stillstand der Glasformmaschine wegen Schmierung der Vorformen nicht erforderlich ist, ergibt sich eine nicht unbeträchtliche Erhöhung der Lebensdauer der Vorformen. Darüber hinaus wird der Verbrauch von Benetz- und Schmiermitteln bei im Vergleich zum Stand der Technik besserer Benetzung und Schmierung der Vorformen minimiert.

Gemäß einer vorteilhaften Weiterbildung des erfindungsgemäßen Trichtermechanismus sind eingangsseitige Anschlussöffnungen der Fluidkanäle im Trichterarm integriert, sind die Fluidkanäle im Trichterarm und in die trichterausbildenden auswechselbaren Trichterringen integriert, und sind die Abstrahldüsen der Fluidkanäle in den Trichterringen integriert. Derartige Trichterringe oder -formen, die z.B. mittels einer Bajonettverschlussvorrichtung mit einem geringen montagetechnischen Aufwand mit dem Trichtermechanismus verbind- und von diesem lösbar sind, können am jeweiligen Trichtermechanismus schnell gewechselt werden. In den jeweiligen Trichterringen oder -formen sind dann entsprechend die Fluidkanäle und Abstrahldüsen für das Benetz- und Schmiermittel ausgebildet, so dass sie beim Montieren des Trichterrings an den Trichtermechanismus automatisch an die trichterarmseitigen Fluidkanäle angeschlossen werden.

Vorteilhaft sind die in den Trichter mündenden Abstrahldüsen - vorzugsweise gleichbeabstandet und kreisförmig - um die Trichteröffnung herum in bzw. an der Trichterwandung angeordnet. Hierdurch kann eine möglichst gleichmäßige Benetzung und Schmierung von den Trichter durchlaufenden Glastropfen realisiert werden.

Die Abstrahldüsen der Fluidkanäle sind zweckmäßigerweise so angeordnet bzw. ausgerichtet, dass das Benetz- und Schmiermittel in Horizontalrichtung abstrahlbar ist.

Alternativ ist es möglich, die Abstrahldüsen der Fluidkanäle so anzuordnen bzw. auszurichten, dass das Benetz- und Schmiermittel in einer zur Horizontalrichtung geneigten Richtung abstrahlbar ist. Die letztere Ausgestaltung kann bei bestimmten Anforderungsprofilen zweckmäßig und vorteilhaft sein.

Gemäß einer vorteilhaften Weiterbildung des erfindungsgemäßen Trichtermechanismus ist die Benetz- und Schmiermittelbeaufschlagung von die Trichter durchlaufenden Glastropfen mittels Ventilen regelbar, die mittels einer Steuervorrichtung der Glasformmaschine takt- und ansteuerbar sind.

Die Benetzungs- und Schmierdauer der Glastropfen kann gemäß einer weiteren vorteilhaften Weiterbildung mittels der Steuervorrichtung der Glasformmaschine angepasst und eingestellt werden.

Im Folgenden wird die Erfindung anhand einer Ausführungsform unter Bezugnahme auf die Zeichnungen näher erläutert. Es zeigen:
- Figur 1: eine perspektivische Prinzipdarstellung einer Ausführungsform der für die vorliegende Erfindung wesentlichen Teile eines erfindungsgemäßen Trichtermechanismus;
- Figur 2: die in Figur 1 gezeigte Ausführungsform des erfindungsgemäßen Trichtermechanismus in einer vertikalen Schnittdarstellung; und
- Figur 3: die in den Figuren 1 und 2 gezeigte Ausführungsform des erfindungsgemäßen Trichtermechanismus in einer horizontalen Schnittdarstellung.

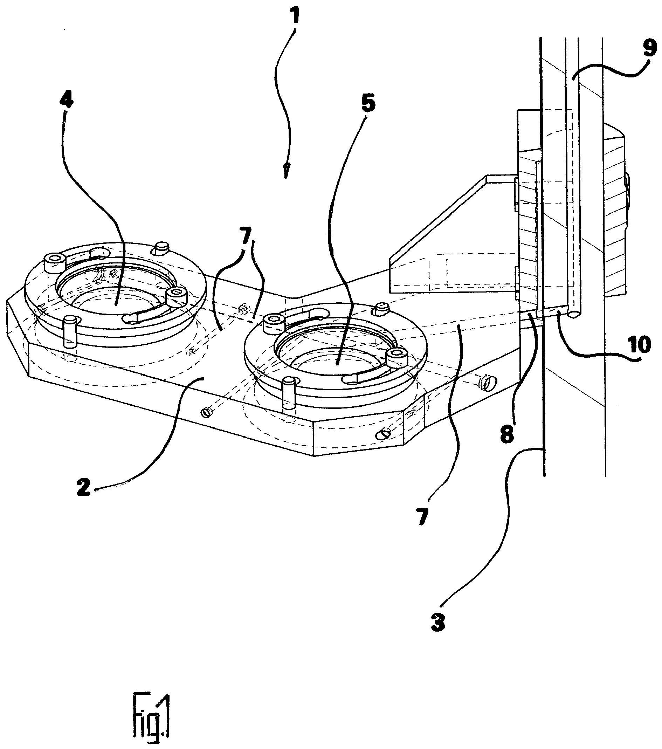

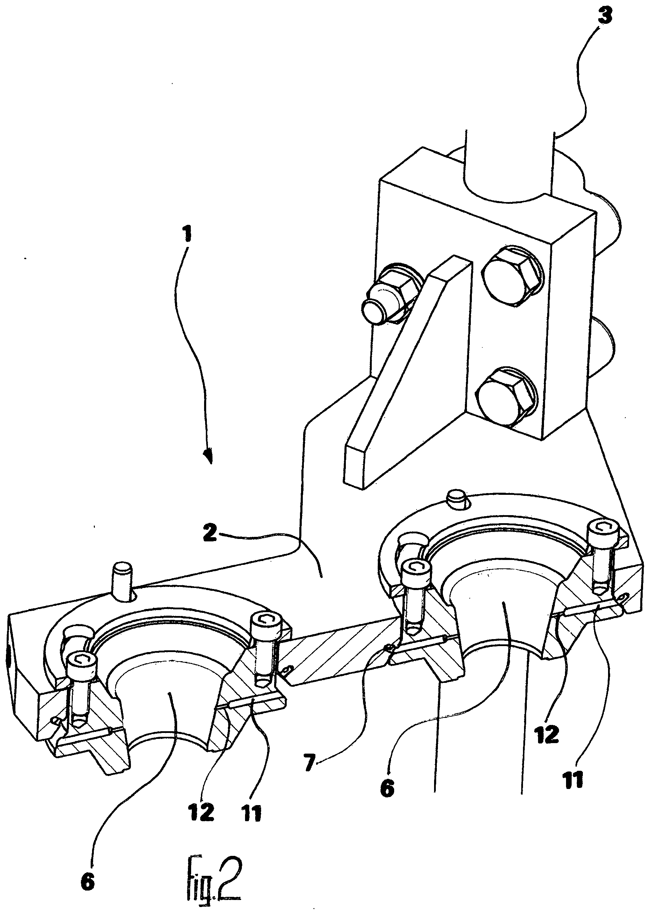

Ein in den Figuren 1 bis 3 hinsichtlich seiner für die vorliegende Erfindung wesentlichen Bestandteile dargestellter und im Folgenden erläuterter Trichtermechanismus 1 dient dazu, in den Figuren nicht dargestellte Glastropfen - möglichst mittig und in vertikaler Richtung - ebenfalls in den Figuren nicht gezeigten Vorformen einer Glasformmaschine, z.B. einer IS-Behälterglas- oder Hohlglasmaschine, zuzuführen.

Diese Glastropfen werden dem Trichtermechanismus 1 durch eine Rinnenanlage zugeführt, zu der Scoop- bzw. obere Rinnen, Throughs- bzw. mittlere Rinnen und Deflektor- bzw. untere Rinnen gehören.

Im in den Figuren dargestellten Ausführungsbeispiel weist der Trichtermechanismus 1 einen Trichterarm 2 auf, der an einer glasformmaschinenseitigen Trichtersäule 3 verstellbar gelagert ist. Im Betrieb der Glasformmaschine, d.h., wenn den Vorformen derselben Glastropfen zugeführt werden, befindet sich der Trichterarm 2 oberhalb derjenigen Vorformen der Glasformmaschine, die ihm zugeordnet sind. Im in den Figuren 1 bis 3 dargestellten Ausführungsbeispiel hat der Trichterarm 2 zwei Trichter 4, 5, die senkrecht oberhalb der beiden dem Trichterarm 2 bzw. dem Trichtermechanismus 1 zugeordneten Vorformen angeordnet werden können. Bei der Einführung von Glastropfen in die in den Figuren nicht gezeigten Vorformen sind die beiden Trichter 4, 5 so angeordnet, dass die Glastropfen senkrecht und in der vertikalen Mittelachse der Vorformen in den Innenraum der Vorformen gelangen.

Im dargestellten Ausführungsbeispiel des Trichtermechanismus 1 werden die Trichter 4, 5 jeweils durch einen Trichterring 6 gebildet, der in einfacher Weise und mit einem geringen Zeitaufwand in am Trichterarm 2 vorgesehene Öffnungen eingebaut und aus diesen ausgebaut werden kann. Als Verbindungsmittel zwischen den Trichterringen 6 einerseits und dem Trichterarm 2 andererseits können beispielsweise Bajonettverschlussvorrichtungen dienen, mittels denen einerseits bei Verschleiß ein schneller Ausbau der Trichterringe möglich ist und andererseits neue Trichterringe 6 leicht in den Trichterarm 2 einbaubar sind.

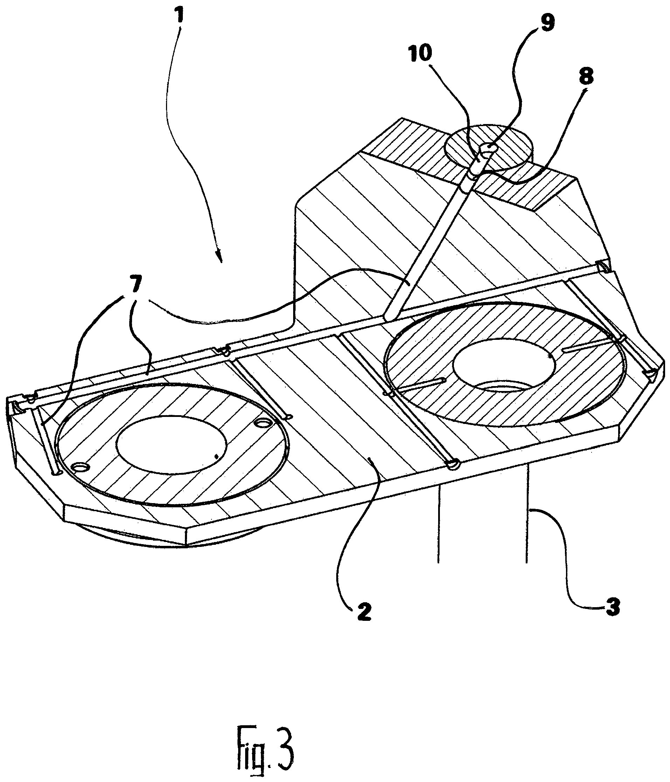

Im Inneren des Trichterarms 2 sind in Figur 1 durch gestrichelte Linien und in der horizontalen Schnittdarstellung der Figur 3 deutlicher gezeigte Fluidkanäle 7 ausgestaltet. Diese Fluidkanäle 7 sind im Trichterarm 2 integriert. Am der Trichtersäule 3 zugewandten Endabschnitt des Trichterarms 2 ist ein Fluidkanal 7 mittels einer der Trichtersäule 3 zugewandten Anschlußöffnung 8 an eine halterseitige Benetz- und Schmiermittelquelle angeschlossen, die im dargestellten Ausführungsbeispiel mittels halterseitiger Kanalbohrungen 9, 10 gebildet ist. Durch die Anschlussöffnung 8 wird Benetz- und Schmiermittel in die trichterarmseitigen Fluidkanäle 7 eingeführt, durch die hindurch das Benetz- und Schmiermittel Fluidkanälen 11 zugeführt wird, die in den Trichterringen 6 ausgebildet sind.

Die trichterringseitigen Fluidkanäle 11 weisen Endabschnitte auf, die Abstrahldüsen 12 bilden.

Im dargestellten Ausführungsbeispiel sind die Abstrahldüsen 12 so gerichtet, dass das Benetz- und Schmiermittel in horizontaler Richtung auf einen Glastropfen trifft, der gerade durch den jeweiligen Trichterring 6 in die diesem zugeordnete Vorform der Glasformmaschine fällt.

Im Trichterarm 2 des Trichtermechanismus 1 ist somit mittels der über die Anschlussöffnung 8 an die glasformmaschinenhalterseitige Benetz- und Schmiermittelquelle 9, 10 angeschlossenen Fluidkanäle 7, der trichterringseitigen Fluidkanäle 11 und deren Abstrahldüsen 12 eine Besprühvorrichtung realisiert, die quasi insgesamt innerhalb des Trichterarms 2 integriert ist. Mittels dieser Besprühvorrichtung kann jeder mittels des Trichtermechanismus 1 den ihm zugeordneten Vorformen zugeführter Glastropfen gleichmäßig und regelmäßig und in der gewünschten Richtung mit Benetz- und Schmiermittel besprüht werden.

Bei dem mittels dieser Besprühvorrichtung realisierten Sprühvorgang werden die Glastropfen mit dem als Trenn- oder Formenschmiermittel fungierenden Benetz- und Schmiermittel gleichmäßig benetzt und besprüht. Dies geschieht quasi exakt in dem Augenblick, bevor die Glastropfen in die einzelnen Vorformen fallen. Entsprechend ist jeder Glastropfen bereits geschmiert, wenn er in die Vorform fällt. Somit wird jeder Glastropfen vorgeschmiert den einzelnen Vorformen zum Formgebungsprozeß zugeführt.

Das Benetz- und Schmiermittel kann aus Wasser, Luft, Emulsion oder herkömmlichen Formenschmierstoffen bestehen, wobei die Viskosität des Benetz- und Schmiermittels entsprechend einem vorgegebenen Anforderungsprofil anpassbar ist.

Es versteht sich, dass innerhalb der Trichterringe 6 die Anordnung der trichterringseitigen Fluidkanäle 11 so gewählt ist, dass diese an die trichterarmseitigen Fluidkanäle 7 angeschlossen sind.

Die trichterringseitigen Abstrahldüsen 12 sind kreisförmig um die durch den Trichterring 6 gebildete Trichteröffnung herum in bzw. an der Trichterwandung ausgestaltet.

Grundsätzlich ist es auch möglich, dass die Anordnung und Richtung der Abstrahldüsen 12 der Fluidkanäle 11 so gewählt wird, dass - sofern ein entsprechendes Anforderungsprofil für den Besprühvorgang besteht - die Besprührichtung geneigt zu einer Horizontalebene angeordnet ist.

Die Benetz- und Schmiermittelbeaufschlagung von die Trichterringe 6 durchlaufenden Glastropfen kann mittels Ventilen realisiert bzw. geregelt werden, die von einer Steuervorrichtung der Glasformmaschine getaktet und angesteuert werden. Hierbei kann die Benetzungs- und Schmierdauer der Glastropfen entsprechend einem vorgebbaren Anforderungsprofil angepasst und eingestellt werden.

Für die direkte Benetzung der Glastropfen können Druckluft und Benetz- und Schmiermittel den Trichterringen 6 getrennt voneinander zugeführt werden. Die Zusammenführung erfolgt dann in bzw. an den Trichterringen 6 stromauf der Abstrahldüsen 12. Hierdurch wird das Benetz- und Schmiermittel in einem fein zerstäubten Zustand auf die Glastropfen gerichtet. Innerhalb der Trichterringe 6 entsteht ein feiner Nebel, durch den hindurch die Glastropfen fliegen, wodurch die Glastropfen allseitig möglichst gleichmäßig benetzt und geschmiert werden.

## Patentansprüche

1. Trichtermechanismus zur Zuführung von Glastropfen in Vorformen einer Glasformmaschine, insbesondere einer IS-Behälterglas- oder Hohlglasmaschine, mit einem Trichterarm (2), der an einer glasformmaschinenseitigen Trichtersäule (3) verstellbar gelagert und oberhalb der ihm zugeordneten Vorformen der Glasformmaschine anordbar ist, und der je ihm zugeordneter Vorform einen Trichter (4, 5) aufweist, mittels dem ein Glastropfen zumindest etwa in einer mittigen Vertikalachse der ihm zugeordneten Vorform anordbar und in die Vorform einführbar ist, **dadurch gekennzeichnet, dass** der Trichtermechanismus (1) Fluidkanäle (7, 11) aufweist, die eingangsseitig an eine Benetz- und Schmiermittelquelle (9, 10) angeschlossen sind und ausgangsseitig in die Trichter (4, 5) mündende Abstrahldüsen (12) aufweisen, durch die hindurch ein im jeweiligen Trichter (4, 5) befindlicher Glastropfen mit Benetz- und Schmiermittel beaufschlagbar ist, und dass die Abstrahldüsen (12) der Fluidkanäle (11) so angeordnet und ausgerichtet sind, dass das Benetz- und Schmiermittel etwa in Horizontalrichtung auf den Glastropfen gerichtet wird.

2. Trichtermechanismus nach Anspruch 1, bei dem eingangsseitige Anschlussöffnungen (8) der Fluidkanäle (7) im Trichterarm (2) integriert sind, die Fluidkanäle (7, 11) im Trichterarm (2) und die Trichter (4) ausbildenden auswechselbaren Trichterringen (6) integriert sind, und die Abstrahldüsen (12) der Fluidkanäle (11) in den Trichterringen (6) integriert sind.

3. Trichtermechanismus nach Anspruch 1 oder 2, bei dem die Benetz- und Schmiermittelbeaufschlagung von die Trichter (4) durchlaufenden Glastropfen mittels Ventilen regelbar ist, die mittels einer Steuervorrichtung der Glasformmaschine takt- und ansteuerbar sind.

4. Trichtermechanismus nach einem der Ansprüche 1 bis 3, bei dem eine Benetzungs- und Schmierdauer der Glastropfen in einer bzw. der Steuervorrichtung der Glasformmaschine anpass- und einstellbar ist.

5. Trichterring oder -form (6) für einen Trichtermechanismus (1), vorzugsweise für einen Trichtermechanismus (1) nach einem der Ansprüche 1 bis 4, der bzw. die, z.B. mittels einer Bajonettverschlussvorrichtung, am Trichtermechanismus (1) schnell wechselbar ist und in dem bzw. der Fluidkanäle (11) und Abstrahldüsen (12) für das Benetz- und Schmiermittel ausgebildet sind.

6. Trichterring oder -form (6) nach Anspruch 5, bei dem bzw. der die in den Trichter (4, 5) mündenden Abstrahldüsen (12) vorzugsweise gleichbeabstandet und kreisförmig um die Trichteröffnung herum in bzw. an der Trichterwandung angeordnet sind.

7. Trichterring oder -form (6) nach Anspruch 5 oder 6, bei dem bzw. der die Abstrahldüsen (12) der Fluidkanäle (11) so angeordnet bzw. ausgerichtet sind, dass das Benetz- und Schmiermittel in Horizontalrichtung abstrahlbar ist.

8. Trichterring oder -form (6) nach Anspruch 5 oder 6, bei dem bzw. der die Abstrahldüsen (12) der Fluidkanäle (11) so angeordnet bzw. ausgerichtet sind, dass das Benetz- und Schmiermittel in einer zur Horizontalrichtung geneigten Richtung abstrahlbar ist.
